# EUROPÄISCHE PATENTSCHRIFT

(11) **EP 2 479 045 B1**
(45) Veröffentlichungstag und Bekanntmachung des Hinweises auf die Patenterteilung: **27.05.2015**
(21) Anmeldenummer: 12000401.5
(22) Anmeldetag: 23.01.2012
(51) Int. Cl.: B60D 1/52, B60R 9/06

(54) **Lastenträger-System**
Load bearer system
Système de support de charges

(30) Priorität: 24.01.2011 DE 102011009307
(43) Veröffentlichungstag der Anmeldung: 25.07.2012
(73) Patentinhaber: WESTFALIA - Automotive GmbH, 33378 Rheda-Wiedenbrück (DE)
(72) Erfinder: Aufderheide, Reinhold, 33397 Rietberg (DE)
(74) Vertreter: Patentanwälte Bregenzer und Reule Partnerschaftsgesellschaft mbB

(56) Entgegenhaltungen:
- EP-A1- 1 987 968
- US-A- 5 664 717
- US-A- 5 845 831
- US-A1- 2009 302 078
- US-A1- 2010 084 449
- US-B1- 7 533 789

## Beschreibung

Die Erfindung betrifft ein Lastenträger-System für ein Kraftfahrzeug, insbesondere ein Personen-Kraftfahrzeug, gemäß dem Oberbegriff des Anspruchs 1.

Ein derartiges Lastenträger-System ist in US 2009/03020078 A1 beschrieben.

Üblicherweise werden Lastenträger, beispielsweise zum Transportieren von Fahrrädern, an einer Anhängekupplung eines Kraftfahrzeuges befestigt. Die Anhängekupplung hat beispielsweise eine fahrzeugseitige Hülse, also einen Grundhalter, sowie als Halterteil einen Kupplungsarm. Üblicherweise hat der Kupplungsarm einen Kugelkopf, an dem der Lastenträger mit einem aufwändigen Spannmechanismus oder Klemmmechanismus befestigbar ist. Beim Fahrbetrieb besteht jedoch die Gefahr, dass sich der Lastenträger relativ zum Halterteil verdreht, weil der Kugelkopf an sich ja für eine drehbare, Kugelgelenkverbindung mit einem Anhänger vorgesehen ist. Zudem ist die Ausrichtung des Lastenträgers relativ zum Kraftfahrzeug schwierig.

Es ist daher die Aufgabe der vorliegenden Erfindung, eine verbesserte Montage eines Lastenträgers an einem Kraftfahrzeug zu ermöglichen.

Zur Lösung der Aufgabe ist ein Lastenträger-System gemäß der technischen Lehre des Anspruchs 1 vorgesehen.

Ein Vorteil der Erfindung ist es, dass der fahrzeugseitige Verbindungskörper eine Formschlussflächenanordnung zum Abstützen des Lastenträgers bezüglich einer Vertikalachse oder Fahrzeug-Hochachse aufweist. Dies bedeutet, dass eine schnelle Ankopplung des Lastenträgers an das Kraftfahrzeug möglich ist. Der erste Verbindungskörper ist beispielsweise direkt an dem Halterteil oder an einem Lastenträger-Adapterteil angeordnet. Bei der Formschlussflächenanordnung können beispielsweise eine oder mehrere Planflächen, zueinander winkelig verlaufende Flächen, Führungsnuten und dergleichen vorgesehen sein, so dass der dazu passende zweite verbindungskörper, der am Lastenträger vorhanden ist verdrehsicher bezüglich der Hochachse oder Vertikalachse am ersten Verbindungskörper halt findet.

Es ist vorteilhaft, wenn der Grundhalter zum Halten eines Kupplungsarms einer Anhängekupplung ausgestaltet und/oder vorgesehen ist.

Die Erfindung sieht vor, dass das Halterteil zur Bildung eines Kupplungsarms mit einem Kuppelteil mittels der Arm-Verbindungseinrichtung lösbar verbindbar ist, wobei an einem freien Ende des Kuppelteils ein Kupplungselement zum Ankuppeln eines Anhängers angeordnet ist. Bei dem Kupplungselement handelt es sich zum Beispiel um eine Kupplungskugel.

Es versteht sich, dass das Kupplungselement auch eine andere als eine kugelige Geometrie aufweisen kann, je nachdem, welche Kupplung am zu ziehenden Anhänger vorhanden ist.

An dem Halterteil kann also wahlweise entweder das Lastenträger-Adapterteil oder auch das Kuppelteil angeordnet werden, so dass eine optimale Ankopplung eines Lastenträgers oder eines Anhängers an das Kraftfahrzeug möglich ist. Im Falle des Kupplungsarms könnte man also von einem zweiteiligen Kupplungsarm sprechen. Im Falle des Arms für den Lastenträger könnte man von einem zweiteiligen, aus Halteteil und Lastenträger-Adapterteil bestehenden Lastenträger-Arm sprechen.

Das Halterteil und/oder das Lastenträger-Adapterteil und/oder das Kuppelteil haben zweckmäßigerweise eine armartige und oder stabförmige Gestalt. Das Halterteil und/oder das Lastenträger-Adapterteil und/oder das Kuppelteil können einen ganz oder abschnittsweise gekrümmten Verlauf und/oder gerade verlaufende Abschnitte aufweisen oder auch insgesamt gerade verlaufen. Wenn das Halterteil und/oder das Lastenträger-Adapterteil eine stabartige, stangenförmige oder armartige Gestalt aufweisen (auch in Kombination miteinander) hat dies den Vorteil, dass ein zum Tragen des Lastenträgers vorgesehener Arm beispielsweise hinten unten vor einem Heckstoßfänger des Kraftfahrzeuges vorsteht, so dass der am Arm angeordnete Verbindungskörper der Lastenträger-Verbindungseinrichtung bequem zugänglich und der Lastenträger bequem montierbar ist.

Das Lastenträger-System hat also eine Lastenträger-Verbindungseinrichtung. Wenn zudem noch das zweckmäßige Lastenträger-Adapterteil vorhanden ist, ist ferner eine Arm-Verbindungseinrichtung vorgesehen. Beide Verbindungseinrichtungen können bei einer zweckmäßigen Ausgestaltung baugleich sein und/oder gleichartig aufgebaut sein und/oder jeweils wechselseitig kompatible Komponenten aufweisen und/oder zueinander wechselweise passen. Aber auch dann, wenn sich die Verbindungseinrichtungen baulich etwas unterscheiden, d.h. nicht zueinander passende Komponenten aufweisen, sind die nachfolgend erläuterten Maßnahmen zweckmäßig.

Beispielsweise haben die Arm-Verbindungseinrichtung und die Lastenträger-Verbindungseinrichtung jeweils zueinander passende erste und zweite Verbindungskörper. Es versteht sich, dass auch weitere Verbindungskörper vorgesehen sein können. Dabei ist der Begriff "Verbindungskörper" nicht auf einen einstückigen Verbindungskörper beschränkt, sondern umfasst auch mehrteilige Verbindungskörper.

Nachfolgend wird zur Vereinfachung der Beschreibung nur noch eine Verbindungseinrichtung beschrieben, wobei diese dann die Arm-Verbindungseinrichtung oder die Lastenträger-Verbindungseinrichtung oder beides sein kann.

Zweckmäßigerweise ist die Verbindungseinrichtung werkzeuglos lösbar und/oder schließbar. Der Bediener kann also ohne ein zusätzliches Werkzeug, zum Beispiel einen Schraubendreher, die Verbindungseinrichtung öffnen oder schließen. Alternativ ist es aber auch möglich, dass eine Bedienung mit einem Werkzeug gewünscht ist, beispielsweise um die Diebstahlsicherheit oder Manipulationssicherheit zu erhöhen.

Es ist auch möglich, dass die Verbindungseinrichtung eine oder mehrere Schrauben aufweist.

Der erste Verbindungskörper weist beispielsweise einen Montageflansch auf. Auch der zweite Verbindungskörper kann einen Montageflansch aufweisen. Zweckmäßigerweise können die beiden Montageflansche aneinander angelegt werden. Zur Fixierung und/oder Verbindung der beiden Montageflansche eignet sich beispielsweise eine oder mehrere Schrauben und/oder ein Klemmmechanismus oder dergleichen.

Der erste Verbindungskörper und der zweite Verbindungskörper weisen zweckmäßigerweise mindestens einen Formschlussvorsprung und mindestens eine Formschlussaufnahme zum formschlüssigen Halt der beiden Verbindungskörper aneinander auf. Beispielsweise handelt es sich bei der Formschlussaufnahme um eine Nut, beim Formschlussvorsprung um einen in die Nut passenden Vorsprung.

Bevorzugt ist ein formschlüssiger Halt des einen Verbindungskörpers am anderen Verbindungskörper, wofür die Verbindungskörper zueinander passende Formschlusskonturen aufweisen. Zweckmäßig ist es, wenn an einander entgegengesetzten Seiten des einen Verbindungskörpers Formschlussvorsprünge vorgesehen sind, die in Formschlussaufnahmen an einander gegenüberliegenden Seiten des anderen Verbindungskörpers eingreifen können. Es versteht sich, dass auch umgekehrt an einen oder beiden einander gegenüberliegenden Seiten des letztgenannten Verbindungskörpers jeweils mindestens eine Formschlussvorsprung vorhanden sein kann, wobei dann an der zugeordneten Seite des erstgenannten Verbindungskörpers eine Formschlussaufnahme vorhanden sein muss.

Der Formschlussvorsprung und die Formschlussaufnahme umfassen zweckmäßigerweise Schwalbenschwanzkonturen. Diese ermöglichen einen besonders einfachen, festen Halt der beiden Verbindungskörper aneinander.

Die Verbindungseinrichtung kann aber auch zumindest teilweise als eine Bajonett-Verbindungseinrichtung ausgestaltet sein. So können beispielsweise am ersten Verbindungskörper und zweiten Verbindungskörper Bajonett-Verbindungsmittel vorgesehen sein. Die Montage der beiden Verbindungskörper aneinander ist also eine Dreh-Montage.

Die Verbindungseinrichtung ist zweckmäßigerweise verriegelbar. Vorteilhaft umfasst sie ein Verriegelungselement zum Verriegeln der Verbindung zwischen dem ersten Verbindungskörper und dem zweiten Verbindungskörper. Das Verriegelungselement ist zwischen einer Verriegelungsstellung und einer Entriegelungsstellung an dem ersten Verbindungskörper oder dem zweiten Verbindungskörper unverlierbar beweglich gelagert. Das Verriegelungselement ist also immer vorhanden, wenn es gebraucht wird. Das Verriegelungselement greift in der Verriegelungsstellung in eine Verriegelungsaufnahme am jeweils anderen Verbindungskörper ein.

Das Verriegelungselement ist zweckmäßigerweise in der Entriegelungsstellung und oder der Verriegelungsstellung verrastbar, so dass nur bei Beaufschlagung mit einer vorbestimmten, relativ hohen Kraft aus seiner jeweiligen Stellung heraus verstellt werden kann.

Eine vorteilhafte Ausgestaltung sieht vor, dass das Verriegelungselement in die Verriegelungsstellung federbelastet ist. Somit nimmt das Verriegelungselement seine Verriegelungsstellung automatisch ein, wenn es nicht, zum Beispiel vom Bediener, aus dieser mit Kraft heraus bewegt wird. Die hierfür erforderliche Federanordnung umfasst beispielsweise eine Schenkelfeder, eine Schraubenfeder oder dergleichen.

Die Verbindungseinrichtung umfasst zweckmäßigerweise ein Klemmelement oder einen Klemmkörper, mit dem der erste Verbindungskörper mit dem zweiten Verbindungskörper verklemmbar ist.

Das Klemmelement bzw. der Klemmkörper und/oder das Verriegelungselement sind zweckmäßigerweise werkzeuglos betätigbare, insbesondere manuell betätigbar. Beispielsweise hat das Klemmelement (oder der Klemmkörper) oder das Verriegelungselement einen Betätigungshandgriff.

Vorteilhaft ist ein motorischer Antrieb, z.B. ein elektrischer Motor, zum Verstellen des Halterteils zwischen der Gebrauchsstellung und der zu dem Kraftfahrzeug hinbewegten Nichtgebrauchsstellung vorhanden, wobei eine manuelle Betätigung auch möglich ist.

Die nachfolgenden Ausführungen betreffen die Verbindung zwischen Halterteil und Grundhalter, die lösbar sein kann und/oder eine schwenkbare Verbindung vorsehen kann, oder dergleichen. Zweckmäßigerweise ist das Halterteil vom Grundhalter lösbar entfernbar.

Die nachfolgend erläuterten bei der Grundhalter-Fixiereinrichtung vorteilhaft vorgesehenen Maßnahmen können selbstverständlich auch bei der oben beschriebenen Arm-Verbindungseinrichtung oder Lastenträger-Verbindungseinrichtung vorteilhaft angewendet werden.

Die Grundhalter-Fixiereinrichtung weist zweckmäßigerweise mindestens ein Paar von Formschlussflächen auf, die zwischen einer Lösestellung, in der die Formschlussflächen voneinander entfernt sind, und einer Fixierstellung der Fixiereinrichtung verstellbar sind, in der die Formschlussflächen formschlüssig aneinander anliegen. Somit ist also das Halterteil am Grundhalter formschlüssig festlegbar.

Dabei ist es möglich, dass beide Formschlussflächen beweglich sind oder auch nur eine der beiden Formschlussflächen. Die bewegliche Formschlussfläche ist beispielsweise an einem Bolzen, einer Kugel, einer Walze oder einem sonstigen Formstück oder Formschlusselement vorgesehen. Bevorzugt ist die mindestens eine bewegliche Formschlussfläche an einem Formschlusskörper vorgesehen, der am oder im Halterteil beweglich gelagert ist.

Vorzugsweise hat die Grundhalter-Fixiereinrichtung einen beweglich gelagerten Betätigungskörper oder Verdrängerkörper, zum Beispiel einen Bolzen oder ein sonstiges Betätigungsstück oder Verdrängerstück, zum Betätigen oder Verdrängen eines Formschlusskörpers in eine Formschlussaufnahme. Am Formschlusskörper und der Formschlussaufnahme sind jeweils Formschlussflächen vorgesehen. Der Formschlusskörper umfasst beispielsweise eine Kugel, eine Rolle oder ein sonstiges Formschlussstück. Die Formschlussaufnahme kann beispielsweise eine Nut, insbesondere eine Ringnut, eine Kugelkalotte oder dergleichen umfassen.

Der Betätigungskörper oder Verdrängerkörper und/oder mindestens ein Formschlusskörper sind zweckmäßigerweise am oder im Halterteil beweglich gelagert. So ist es beispielsweise möglich, im Innenraum des Halterteils einen Betätigungskörper oder Verdrängerkörper beweglich anzuordnen, der seinerseits wieder auf einen oder mehrere Formschlusskörper zum formschlüssigen Halt am Grundhalter wirkt. Es ist vorteilhaft, auch den mindestens einen Formschlusskörper am Halteteil oder im Halterteil beweglich zu lagern. So sind beispielsweise von einer Lageraufnahme für den Betätigungskörper oder Verdrängerkörper abzweigende Kanäle (oder mindestens ein Kanal) vorgesehen, in dem ein jeweiliger Formschlusskörper, der durch den Betätigungskörper oder Verdrängerkörper betätigt oder verdrängt wird, beweglich gelagert ist.

Eine lösbare Verbindung zwischen Halterteil und Grundhalter umfasst zweckmäßigerweise eine Steckverbindung. Zum Beispiel hat der Grundhalter eine Steckaufnahme, in die ein Steckvorsprung des Halterteils einsteckbar ist. Es versteht sich, dass auch das Halterteil eine Steckaufnahme aufweisen kann, so dass es auf einen entsprechenden Steckvorsprung am Grundhalter aufsteckbar ist.

Eine bewegliche, jedoch vorteilhaft fixierbare, Verbindung zwischen Halterteil und Grundhalter kann beispielsweise dadurch hergestellt werden, dass das Halterteil und der Grundhalter Lagerkomponenten eines Schwenklagers und/oder eines Schiebelagers aufweisen, so dass das Halterteil an dem Grundhalter schwenk- und/oder schiebebeweglich gelagert ist. Somit kann die Das Halterteil beispielsweise aus einer Nichtgebrauchsstellung hinter einem Stoßfänger des Kraftfahrzeugs in Richtung einer Gebrauchsstellung verstellt werden, in der das Halterteil selbst, gegebenenfalls das Kuppelteil oder das Lastenträger-Adapterteil nach hinten vor den Stoßfänger vorstehen, so dass ein Anhänger angekuppelt bzw. ein Lastenträger befestigt werden kann.

Vorteilhaft ist eine Verdrehsicherung zwischen Halterteil und Grundhalter vorgesehen. Am Halterteil und am Grundhalter sind hierfür ortsfeste Drehsicherungsformschlusskonturen vorgesehen, zum Beispiel Dreieckskonturen, also zum Beispiel ein Dreieckvorsprung und eine Dreieckaufnahme, und/oder Kugeln und Kugelkalotten zum Eingriff ineinander. Diese Verdrehsicherungskonturen können beispielsweise bei der vorgenannten "Steck-Variante", selbstverständlich aber auch bei einer Schwenk- und/oder Schiebelagerung des Halterteils am Grundhalter vorhanden sein.

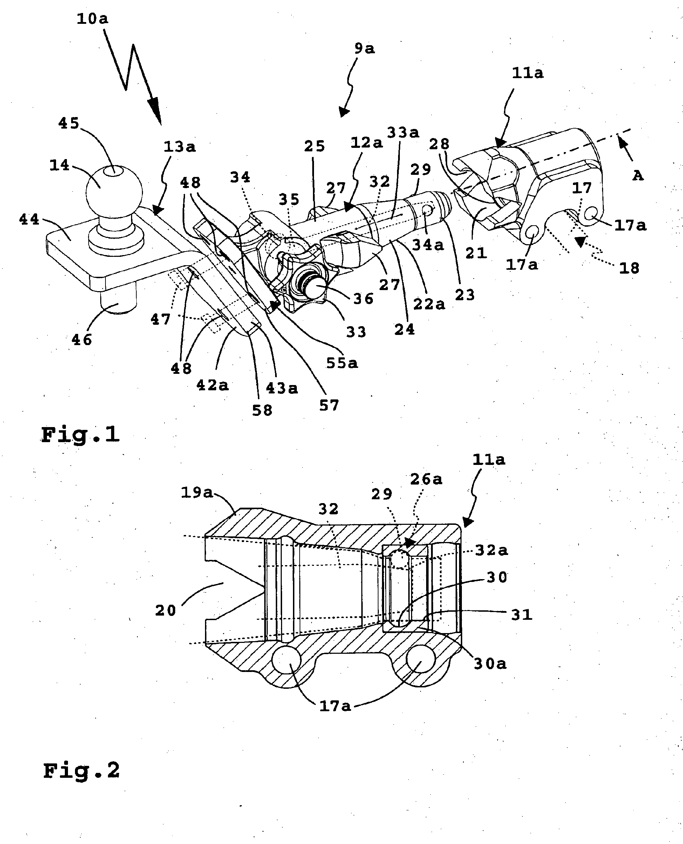

- Figur 1: eine perspektivische Schrägansicht einer Anhängekupplung mit einem mittels Montageflanschen an einem Halterteil befestigbaren oder befestigten, eine Kupplungskugel aufweisenden Kuppelteil,
- Figur 2: eine Querschnittsansicht eines Grundhalter der Anhängekupplung gemäß Figur 1 entlang einer Schnittlinie A,

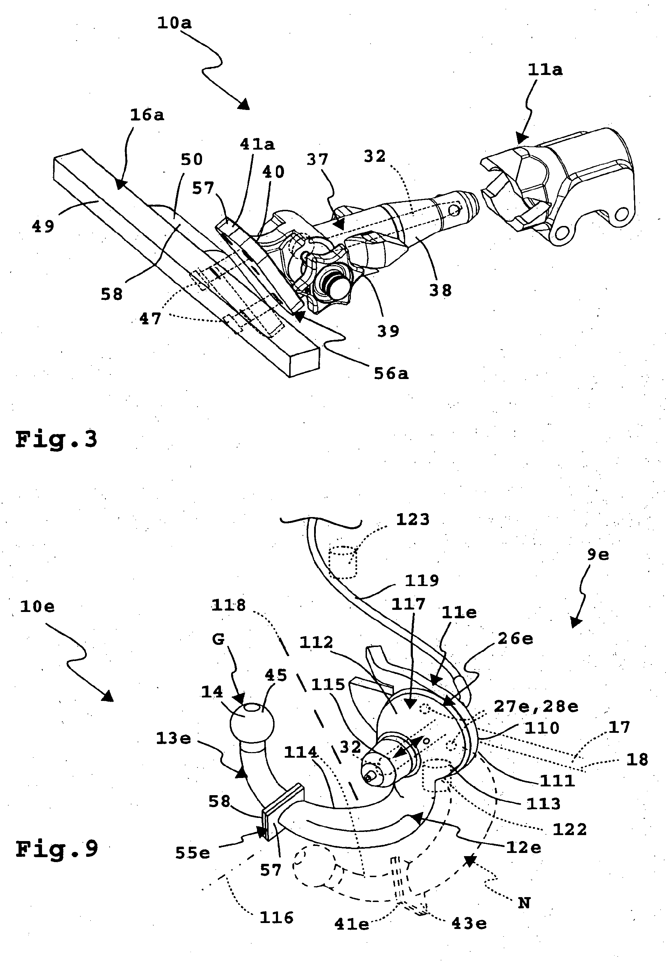

- Figur 3: die Anhängekupplung gemäß Figur 1, jedoch statt mit dem Kuppelteil mit einem schematisch angedeuteten Lastenträger,
- Figur 4a: ein Lastenträger-System mit einem Lastenträger und einer Lastenträger-Verbindungseinrichtung zur verdrehsicheren Verbindung des Lastenträgers mit einem an einem Halterteil angeordneten Lastenträger-Adapterteil,
- Figur 4b: das Halterteil gemäß Figur 4a, jedoch in Verbindung mit einem einen Kugelkopf aufweisenden Kuppelteil,
- Figur 4c: einen Querträger mit einem Grundhalter für das Halterteil gemäß Figuren 4a, 4b,
- Figur 5a: einen Ausschnitt B aus Figur 4a, wobei die Lastenträger-Verbindungseinrichtung gelöst ist,
- Figur 5b: den Ausschnitt gemäß Figur 5a, jedoch mit geschlossener Lastenträger-Verbindungseinrichtung,
- Figur 6: die Lastenträger-Verbindungseinrichtung gemäß Figur 5b von schräg unten, jedoch mit einer alternativen, mit einem Lastenträger-Adapterteil einstückigen Ausgestaltung eines Halterteils,

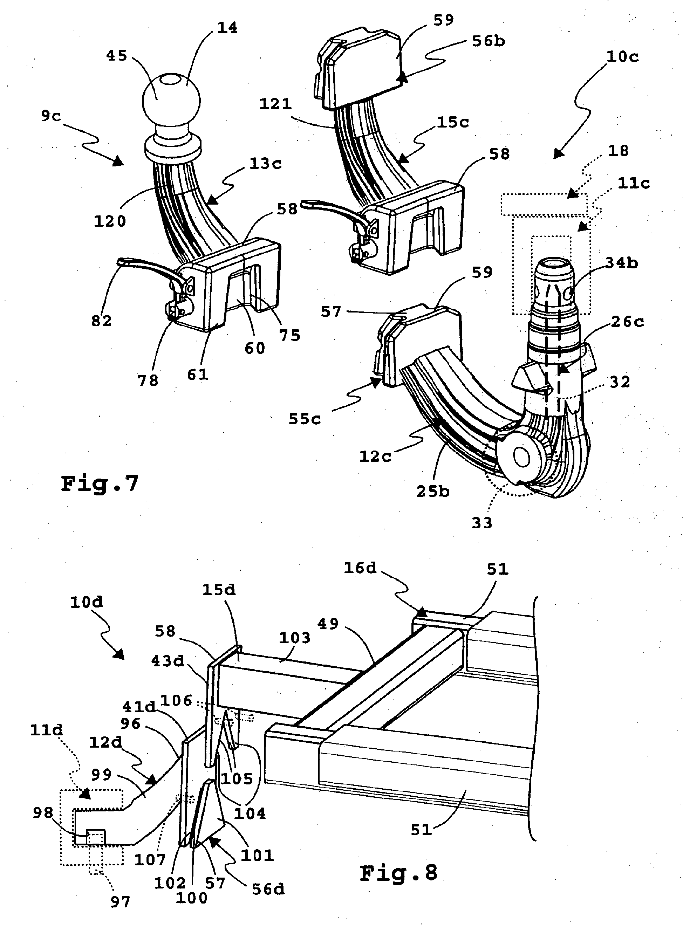

- Figur 7: eine Abwandlung des Systems gemäß Figuren 4 und 5, wobei eine Armverbindungseinrichtung und eine Lastenträger-Verbindungseinrichtung baugleiche, zueinander kompatible Komponenten aufweist,
- Figur 8: ein Halterteil oder einen Lastenträger-Adapterteil sowie ein Lastenträger mit einer weiteren möglichen Ausgestaltung einer einfach lösbaren Verbindungseinrichtung, und
- Figur 9: eine schwenkbare Anhängekupplung mit auswechselbarem Kuppelteil.

Bei den nachfolgenden Ausführungsbeispielen Systemen 10a-10e sind gleiche oder gleichartige Komponenten mit denselben Bezugszeichen versehen. Zur Verdeutlichung von Unterschieden sind zu den Bezugziffern teilweise noch die Buchstaben a, b, c, d und e hinzugefügt.

Die Systeme 10a-10e weisen Grundhalter 11a-11e auf, an denen Halterteile 12a-12e lösbar befestigbar (Halterteile 12a-12d) oder beweglich (Halterteil 12e) gelagert sind.

An den Halterteilen 12a-12e sind weitere Komponenten befestigbar, beispielsweise Kuppelteile 13a, 13b, 13c oder 13e. Auch am Halterteil 12d könnte ein Kuppelteil befestigt werden, was jedoch nicht dargestellt ist. An den Kuppelteilen 13 ist jeweils ein Kuppelelement 14 vorgesehen, zum Beispiel eine Kupplungskugel. An die Kupplungskugel kann ein Anhänger mittels einer so genannten Zugkugelkupplung angehängt werden.

Somit bilden die Systeme 10a-10e, wenn die Kuppelteile 13a, 13b, 13c oder 13e an den Halterteilen 12a-12e angeordnet sind, wodurch jeweils Kupplungsarme gebildet sind, jeweils eine Anhängekupplung 9a, 9b, 9c, 9e zum Ankuppeln eines Anhängers.

Aber auch die Befestigung eines Lastenträgers, zum Beispiel zum Transportieren von Fahrrädern, einer Transportbox oder dergleichen, kann bei den Systemen 10a-10e einfach und effizient erfolgen, indem nämlich der jeweilige Lastenträger (beispielhaft sind Lastenträger 16a, 16b und 16d dargestellt) mit den jeweiligen Halterteil verbunden wird, im Falle der Halterteile 12a, 12d direkt mit dem Halterteil, im Falle der Halterteile 12b, 12c und 12e mittels eines Lastenträger-Adapterteils 15b, 15c und 15e.

Die jeweilige Verbindung zwischen Halterteil und Lastenträger, gegebenenfalls unter Zwischenschaltung des Lastenträger-Adapterteils 15b, 15c und 15e, ist dabei montagefreundlich, d.h. leicht lösbar oder schließbar, zudem aber auch sehr belastbar, insbesondere verdrehsicher. Die Verbindungsqualität zwischen Fahrzeug und Lastenträger ist optimal, so dass der jeweilige Lastenträger mit einer großen Last beladen werden kann. Die Fahrsicherheit ist hoch.

Der Grundhalter 11a ist an einem schematisch dargestellten Querträger 17 eines Fahrzeugs 18 befestigbar oder befestigt, beispielsweise verschweißt, verschraubt oder verklebt. Der Grundhalter 11a hat z.B. Montagebohrungen 17a. Prinzipiell könnte ein Grundhalter eines erfindungsgemäßen Systems auch ein integraler Bestandteil eines Querträgers sein. Der Grundhalter 11a umfasst eine Aufnahmehülse 19a mit einer Steckaufnahme 20 zum Einstecken und Halten des Halterteils 12a. Die Steckaufnahme 20 hat eine verhältnismäßig weite Einstecköffnung 21 und verengt sich zu ihrem Endbereich 31 hin. Der Grundhalter 11a besteht beispielsweise aus Metall, insbesondere Stahl oder Aluminium.

Das Halterteil 12a hat einen Steckvorsprung 22a zum Einstecken in die Steckaufnahme 20. Der Steckvorsprung 22a hat passend zur Steckaufnahme 20 einen vorderen Bereich 23 mit einem kleinen Durchmesser, an denen sich ein konischer Bereich 24 und weiter ein Halsbereich 25 anschließen. Der Durchmesser des Halsbereichs 25 passt zur Einstecköffnung 21.

Eine Grundhalter-Fixiereinrichtung 26a umfasst seitlich vom Halsbereich 25 abstehende Drehsicherungsformschlusskonturen 27 zum Eingriff in am Grundhalter 11a, insbesondere an dessen Einstecköffnung 21, vorgesehene Drehsicherungsformschlusskonturen 28. Die Drehsicherungsformschlusskonturen 27, 28 sind beispielsweise dreieckförmig oder keilförmig und greifen formschlüssig ineinander, wenn der Steckvorsprung 22a in die Steckaufnahme 20 eingesteckt wird, so dass das Halterteil 12a am Grundhalter 11a verdrehsicher gehalten ist.

Für eine zugfeste Fixierung und ein Verspannen des Halterteils 12a am Grundhalter 11a sind Formschlusskörper 29 vorgesehen, die in eine oder mehrere Formschlussaufnahmen 30 in einer Fixierstellung der Grundhalter-Fixiereinrichtung 26a eingreifen. Die Formschlusskörper 29 sind beispielsweise in an sich bekannter Weise Kugeln, die durch einen Betätigungskörper 32 vorderen Außenumfang des Steckvorsprungs 22a vor verstellbar sind, so dass sie in die Formschlussaufnahme(n) 30 eingreifen. Die Formschlussaufnahme 30 ist beispielsweise ringförmig, insbesondere als Ringnut, ausgestaltet, wobei z.B. auch mindestens eine Kugelkalotte oder eine andere Formschlussaufnahme möglich ist. Die Ringnut befindet sich am Endbereich 31 der Steckaufnahme 20. Hierfür kann, was in der Zeichnung angedeutet ist, beispielsweise ein Ringelement 30a, an dem die Ringnut angeordnet ist, in der Steckaufnahme 20 angeordnet sein.

Der Betätigungskörper 32, den man auch als Verdrängerkörper bezeichnen kann, hat beispielsweise eine stangenartige oder bolzenartige Gestalt. An seinem vorderen, den Formschlusskörpern 29 zugewandten Bereich weist der Betätigungskörper 32 Schrägflächen 32a auf, so dass er die Formschlusskörper 29 nach radial außen vorderen Außenumfang des Steckvorsprung 20 verdrängt, wenn er in Richtung der Formschlusskörper 29 insbesondere linear verschoben wird. In diese Richtung (Pfeil 33a) ist der Betätigungskörper 32 vorteilhaft federbeaufschlagt, so dass die Grundhalter-Fixiereinrichtung 26 sozusagen selbsttätig verriegelt und fixiert.

Der Betätigungskörper 32 ist mittels eines Handgriffs 33 betätigbar. Mit dem Handgriff 33 ist ein Ritzel 34 bewegungsgekoppelt oder fest verbunden, das mit einem Zahnabschnitt 35 des Betätigungskörpers 32 kämmt. Ein Bediener kann also den Handgriff 33 ergreifen und drehen und damit den Betätigungskörper 32 von den Formschlusskörpern 29 weg bewegen (in der Zeichnung nach links), so dass diese sich in Führungskanälen 34a nach radial innen in einen Innenraum des Steckvorsprungs 22a zurückgelangen können und außer Eingriff mit der Formschlussaufnahme 30 gelangen. Somit ist die Grundhalter-Fixiereinrichtung 26a entriegelt.

Die Grundhalter-Fixiereinrichtung 26a ist vorteilhaft mittels eines Schlosses 36 verschließbar.

Aus dem vorstehenden wird deutlich, dass zur Verriegelung des Halterteils 12a am Grundhalter 11a ein gewisser Aufwand nötig ist. Insbesondere ist ein Grundkörper 37a des Halterteils 12a zur Aufnahme der Grundhalter-Fixiereinrichtung 26a ausgestaltet und mechanisch belastbar für den Fahrbetrieb mit einem Anhänger sein.

Fertigungstechnisch ist es vorteilhaft, wenn der Grundhalter 11a und das Halterteil 12a in der beschriebenen Form für unterschiedliche Fahrzeugtypen einsetzbar sind und auch vorteilhaft die Adaption eines Lastenträgers, wenn es gewünscht ist, leicht und bequem möglich ist. Dies ist der Fall und wird nachfolgend deutlich.

Der vorliegend einstückige Grundkörper 37 des Halterteils 12a hat einen Grundhalterbereich 38 zur Montage am Grundhalter 11a, einen Mittelabschnitt 39 sowie einen Montageabschnitt 40 zur Verbindung mit weiteren Bauteilen, beispielsweise dem Kuppelteil 13a.

Am Montageabschnitt 40 ist ein Montageflansch 41a zur Verbindung mit dem Kuppelteil 13a vorhanden. Der Montageflansch 41a ist beispielsweise plattenartig. Der Montageflansch 41a ist bezogen auf eine Längserstreckungsachse des Halterteils 12a schräg geneigt, beispielsweise nach schräg hinten unten, wobei dies optional ist. Möglich wäre auch zum Beispiel ein zur Längserstreckungsachse rechtwinkeliger Montageflansch oder ein nach oben geneigter Montageflansch.

Das Kuppelteil 13a hat einen Grundkörper 42a mit einer Montageplatte 43a, die zur Montage am Montageflansch 41a vorgesehen ist. Die Montageplatte 43a steht winkelig von einer Trägerplatte 44 ab, an der wiederum das Kuppelelement 14 angeordnet ist. Das Kuppelelement 14 umfasst eine Kupplungskugel 45, die an einem zum Beispiel stabförmigen Träger 46 angeordnet ist. Der Träger 46 ist beispielsweise an den Grundkörper 42a angeschweißt, angeklebt oder dergleichen, vorliegend jedoch durch eine Öffnung der Trägerplatte 44 durchgesteckt und von unten her verschraubt. Dies ermöglicht ein einfaches Auswechseln des Kuppelelements 14 gegen ein anderes Kuppelelement, beispielsweise mit anderer Geometrie. Der Träger 46 stützt sich mit einem Flanschvorsprung an der Oberseite der Trägerplatte 44 ab. Die Kupplungskugel 45 steht nach oben vor die Trägerplatte 44 vor, so dass ein Anhänger angekuppelt werden kann.

Die Montageplatte 43a ist mit dem Montageflansch 41a verschraubt. Beispielsweise sind vier Bolzen 47 durch Bohrungen 48 an der Montageplatte 43a bzw. dem Montageflansch 41a durchgesteckt oder in diese eingeschraubt.

Die Montageplatte 43a und die Trägerplatte 44 sind vorliegend einstückig, das heißt sie sind fertigungstechnisch einfach realisierbar, beispielsweise durch Abkanten oder Umformen eines plattenförmigen Rohlings. Es versteht sich, dass auch mehrteilige Kuppelteile und/oder mehrteilige Grundkörper von Kuppelteilen möglich sind.

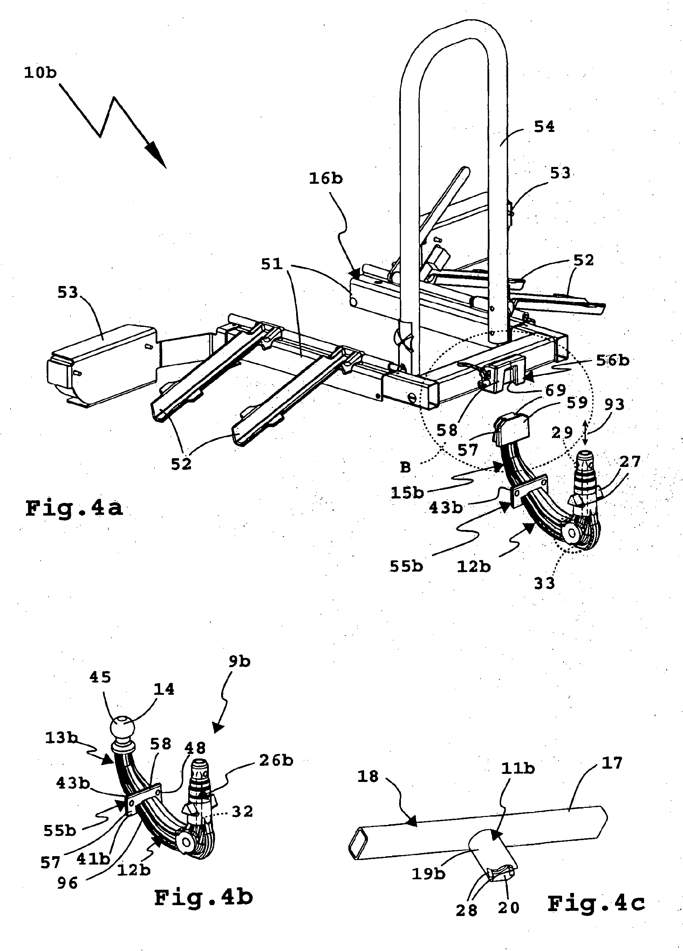

Die Verbindungstechnik, die am Halterteil 12a bereits vorhanden ist, kann auch für einen Lastenträger genutzt werden. Beispielsweise ist es möglich, anstelle des Kuppelteils 13a den Lastenträger 16a am Halterteil 12a zu befestigen. Vom Lastenträger 16a sind lediglich ein Querträger 49 und eine von diesem winkelig in der Art der Montageplatte 43a abstehende Montageplatte 50 dargestellt. Der Lastenträger 16a hat vorteilhaft noch weitere Komponenten, beispielsweise solche, die der in Figur 4a dargestellte Lastenträger 16b aufweist.

Der Lastenträger 16b (oder auch der Lastenträger 16a) hat zum Beispiel ebenfalls einen Querträger 49, von dem Längsträger 51 winkelig, zum Beispiel in Gestalt eines U abstehen. Somit ist eine Trägerbasis gebildet. An den Längsträgern 51 sind Trageelemente 52, zum Beispiel Rinnen zum Transportieren von Fahrrädern schwenkbar gelagert, wobei sie zwischen einer nach außen vor die Längsträger 51 vorstehenden (in der Zeichnung dargestellten) Gebrauchsstellung und einer zwischen die Längsträger 51 hinein verstellten Nichtgebrauchsstellung verstellbar sind. Auf die Längsträger 51 könnte selbstverständlich auch eine Transportbox oder dergleichen aufgestellt werden. Weiterhin sind am Lastenträger 16 b, zum Beispiel an den freien Endbereich in der Längsträger 51, Leuchten 53 angeordnet. Der Lastenträger 16b hat zu dem noch eine Stütze 54, zum Beispiel einen U-Bügel, an dem die auf dem Lastenträger 16b abgelegte Last befestigbar ist.

Die Montageplatte 50 ist beispielsweise mit dem Querträger 49 verschweißt, verschraubt oder dergleichen. Eine einfache Verschraubungstechnik ist auch zur Montage am Halterteil 12a vorgesehen. Auch die Montageplatte 50 hat Bohrungen 48, so dass sie mit den Bolzen 47 am Montageflansch 41a befestigt werden kann.

Der Montageflansch 41a, die Montageplatte 43a und die Bolzen 47 bilden eine Arm-Verbindungseinrichtung 55a. Der Montageflansch 41a, die Montageplatte 50 und die Bolzen 47 bilden eine Lastenträger-Verbindungseinrichtung 56a. Der Montageflansch 41a bildet dabei einen 1. Verbindungskörper 57, der die Montageplatte 43a oder die Montageplatte 50 jeweils einen 2. Verbindungskörper 58 der Arm-Verbindungseinrichtung 55a oder der Lastenträger-Verbindungseinrichtung 56a.

Während der Lastenträger 16a noch mit den Bolzen 47 der Lastenträger-Verbindungseinrichtung 56a relativ umständlich am Halterteil 12a befestigbar ist, kann der Lastenträger 16b mittels einer Lastenträger-Verbindungseinrichtung 56b, die quasi eine Schnellkupplung darstellt, schnell und bequem am Lastenträger-Adapterteil 15b befestigt und von diesem auch wieder gelöst werden. Dabei ist allerdings zu bemerken, dass die Montage des mit dem Halterteil 12a versehenen Lastenträgers 16a am Grundhalter 11a einfach ist, da das Halterteil 12a lediglich in die Steckaufnahme 20 eingesteckt werden muss. Dies ist insbesondere vorteilhaft, wenn der Lastenträger 16a voluminös ist und/oder schwer.

Die nachfolgend beschriebene Lastenträger-Verbindungseinrichtung 56b ist jedoch als eine Art Schnellkupplung ausgestaltet, so dass sie besonders leicht bedienbar ist:
Der 1. Verbindungskörper 57 der Lastenträger-Verbindungseinrichtung 56b umfasst einen Steckkopf 59, der in eine Steckaufnahme 60 eines den 2. Verbindungskörper 58 der Lastenträger-Verbindungseinrichtung 56b bildenden Aufnahmekörpers 61 einsteckbar ist. Der Aufnahmekörper 61 ist am Querträger 49 angeordnet, beispielsweise angeschweißt oder dergleichen.

Die Steckaufnahme 60 weist grundsätzlich eine U-förmige Gestalt auf. Die Steckaufnahme 60 ist seitlich von Seitenabschnitten 62 und oben von einem Stützabschnitt 63 begrenzt. Eine der Steckaufnahme 60 zugewandte Bodenwand 64 des Stützabschnitts 63 stützt sich auf einer oberen Tragfläche 68 des Steckkopfes 59 ab, so dass der Lastenträger 16b eine Horizontalabstützung erfährt. Aber auch um eine Vertikalachse, d.h. eine Hochachse, sind eine optimale Abstützung und ein optimaler formschlüssiger Halt zwischen dem Lastenträger 16b und dem Lastenträger-Adapterteil 15b vorhanden. Hierfür würde es bereits genügen, wenn an den Seitenabschnitten 62 beispielsweise Planflächen oder sonstige Verdrehsicherungskonturen vorhanden wären. Vorliegend sind jedoch an denen Seitenabschnitten 61 Formschlussvorsprünge 65 angeordnet, die in Formschlussaufnahmen 66 am Steckkopf 59 formschlüssig eingreifen. Die Formschlussvorsprünge 65 sind einander zugewandt, d.h. zur Innenseite der Steckaufnahme 60 hin. Die Formschlussaufnahmen 66 sind an voneinander abgewandten Seiten, nämlich Seitenflanken 67 des Steckkopfes 59 angeordnet. Die Formschlussaufnahmen 66 sind beispielsweise V-förmig, jedoch zweckmäßigerweise ausgerundet.

Die Formschlussaufnahmen 66 verlaufen zweckmäßigerweise in Richtung der oberen Tragfläche 68 aufeinander zu, sind also schräg verlaufend. Selbstverständlich korrespondiert der Verlauf der Formschlussvorsprünge 65 dazu, d.h. auch diese verlaufen schräg in Richtung der Bodenwand 64 aufeinander zu. Dadurch ist ein besonders fester, formschlüssiger Sitz des Steckkopfs 59 in der Steckaufnahme 60 möglich.

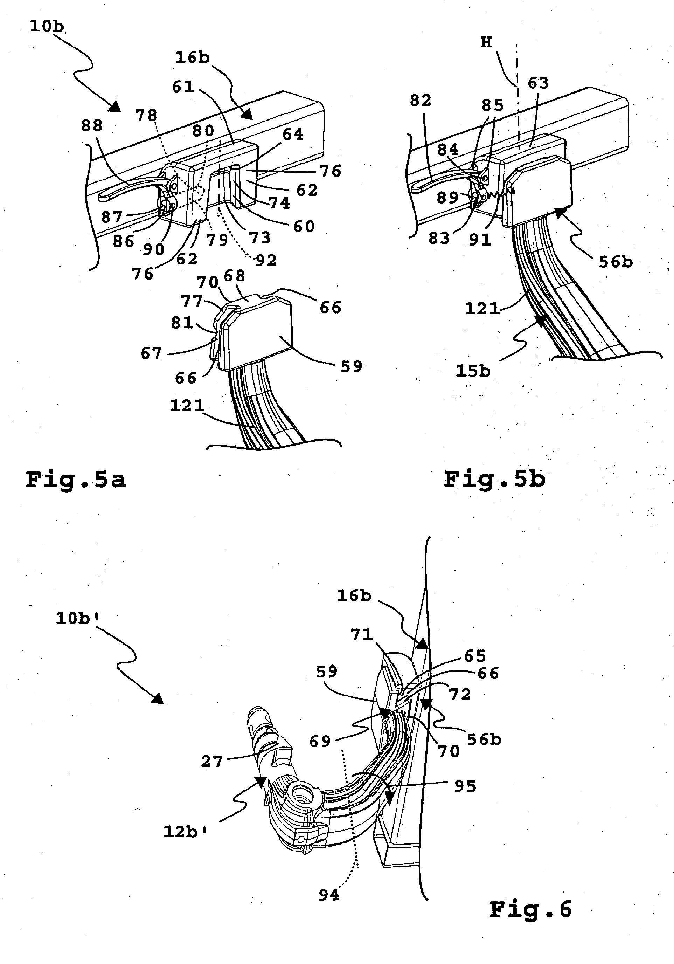

Auch die weitere, insbesondere in Figur 6 gut sichtbare Ausgestaltung der Formschlussvorsprünge 65 und Formschlussaufnahmen 66 umfassenden Formschlussflächenanordnung 69 trägt zur optimalen Abstützung der beiden Verbindungskörper 57,58 der Lastenträger-Verbindungseinrichtung 56b aneinander bei, insbesondere auch zur Verhinderung einer Relativverdrehung um eine vertikale Achse oder eine zumindest etwa vertikale Achse, z.B. eine Hochachse H.

Der Steckkopf 59 umfasst eine im Wesentlichen plane Stirnfläche 70 sowie 2 dazu versetzt angeordnete Stützflächen 71. Beispielsweise sind die Stirnfläche 70 und die beiden Stützflächen 71 parallel versetzt und/oder verlaufen im Wesentlichen parallel zueinander. Die beiden Stützflächen 71 stehen seitlich vor die Stirnfläche 70 vor. Die Stützflächen 71 bilden Bestandteile der Formschlussaufnahmen 66, nämlich eine von deren Seitenflanken, zu denen die andere Seitenflanke 72 schräg winkelig verläuft. Insgesamt ergibt sich eine schwalbenschwanzartige Gestalt.

Die Formschlussflächen der Steckaufnahme 60 korrespondieren zu diesen vorher erläuterten Flächen. Die Stirnfläche 70 stützt sich an einer Rückwandfläche 73 ab, die sich zwischen den Seitenabschnitten 62 erstreckt. Die Seitenflanke 72 stützt sich an einer Seitenfläche 74 der Formschlussvorsprünge 65 ab, die neben der Rückwandfläche 73 angeordnet ist.

Die beiden Seitenflächen 74 laufen von der Rückwandfläche 73 weg sozusagen aufeinander zu. Jedenfalls ist eine stirnseitige Öffnung 75 der Steckaufnahme 60 weniger breit als die Rückwandfläche 73.

Die Stützflächen 71 können sich an Stützflächen 76 neben der stirnseitigen Öffnung 75 abstützen.

Der Steckkopf 59 stützt sich also nicht nur mit seiner Stirnfläche 70, sondern stufig dazu mit seinen rückwärtigen Stützflächen 71 am 2. Verbindungskörper 58 bzw. der Steckaufnahme 60 ab.

Das Einstecken des Steckkopfs 59 in die Steckaufnahme 60 ist zweckmäßigerweise durch Schrägflächen erleichtert, beispielsweise durch den Schrägverlauf der Formschlussvorsprünge 65 und der Formschlussaufnahmen 66 in Richtung des Bodens der Steckaufnahme 60, aber auch durch Schrägflächen 77 oben am Steckkopf 59, beispielsweise neben der Tragfläche 68.

Die Lastenträger-Verbindungseinrichtung 56b weist eine Verriegelungseinrichtung zum Verriegeln der Verbindung zwischen den Verbindungskörper 57, 58 auf. Am 2. Verbindungskörper 58 ist ein Verriegelungselement 78 beweglich gelagert. Beispielsweise ist ein Bolzen 79 in einer Führung 80, zum Beispiel einer Bohrung, an einem der Seitenabschnitte 62 linear beweglich gelagert. In seiner Verriegelungsstellung greift das Verriegelungselement 78 in eine Verriegelungsaufnahme 81 am Steckkopf 59 ein.

Die Verriegelungsaufnahme 81 verläuft ebenso wie die Führung 80 quer zu einer Steckachse 92, entlang derer der Steckkopf 59 und die Steckaufnahme 60 aneinander angesteckt oder voneinander entfernt werden. Wenn also eine vorderer, freier Endbereich des Bolzens 79 bzw. des Verriegelungselements 78 in die Verriegelungsaufnahme 81 eingreift, kann der 2. Verbindungskörper 58 nicht mehr vom 1. Verbindungskörper 57 entfernt werden, ist also verriegelt.

Die Verriegelungsaufnahme 81 ist beispielsweise als eine Nut oder Vertiefung an der Stirnfläche 70 ausgebildet, wobei selbstverständlich auch eine Bohrung oder ein Sackloch möglich sind. Die Verriegelungsaufnahmen 81 und das Verriegelungselement 78 sind zumindest im Bereich ihrer einander zugewandten, miteinander zusammenwirkenden Flächen zweckmäßigerweise ausgerundet oder rund.

Zur Betätigung des Verriegelungselements 78 dient ein Betätigungshebel 82, der mittels eines Lagers 83 schwenkbar am 2. Verbindungskörper 58 bzw. Aufnahmekörper 61 gelagert ist. Vom Betätigungshebel 82 stehen Lagervorsprünge 84 ab, die Lagerböcken 85 schwenkbar gelagert sind. Selbstverständlich könnte der Betätigungshebel 82 auch von einer Lagerachse durchdrungen sein. Neben dem Lager 83 stehen ein Betätigungsarm 88 und ein Mitnehmerarm 86 vom Betätigungshebel 82 ab, der in eine Mitnehmeraufnahme 87 am Verriegelungselement 78 eingreift. Der Betätigungsarm 88 und der mit dem Arm 86 sind beispielsweise zueinander winkelig, vorliegend etwa rechtwinkelig. Der Betätigungsarm 88 kann vom Bediener ergriffen und verschwenkt werden wobei vorliegend die Lösebewegung oder Entriegelungsbewegung ein Schwenken des Betätigungsarms 88 nach oben vorsieht. Der in die Mitnehmeraufnahme 87 eingreifende Mitnehmerarm 86 zieht dann den Bolzen 79 oder das Verriegelungselement 78 aus der Verriegelungsaufnahme 81 heraus und entriegelt somit die Verriegelungseinrichtung. Die Mitnehmeraufnahme 87 umfasst beispielsweise einen Schlitz 89 in die der Mitnehmerarm 86 in der Art eines Hakens eingreift und sich an einem quer zur Schlitz 89 verlaufenden Bolzen 90 abstützt.

Das Verriegelungselement 78 ist zweckmäßigerweise in die Verriegelungsstellung federbelastet. Beispielsweise ist eine Schenkelfeder vorgesehen, die den Betätigungshebel 82 in Richtung der Verriegelungsstellung belastet. Es ist aber auch möglich, dass beispielsweise eine Zugfeder 91 das Verriegelungselement 78 direkt belastet. Zweckmäßigerweise ist die Zugfeder 91 geschützt im Innern des Aufnahmekörpers 61 angeordnet, was in der Zeichnung nur schematisch angedeutet ist.

Es versteht sich, dass das Verriegelungselement 78 auch die Funktion eines Klemmelements haben kann, beispielsweise wenn sein vorderes, freies Ende eine Schrägfläche aufweist, die im Sinne eines Verkeilens oder Verklemmens auf die Gegenkontur, vorliegend die Verriegelungsaufnahme 81, wirkt. Möglich wäre es auch, dass die Verriegelungsaufnahme 81 eine Schrägfläche oder Klemmfläche aufweist, wobei es dann nicht notwendig ist, jedoch zweckmäßig, wenn das zugehörige Verriegelungselement oder Klemmelement ebenfalls eine Schrägfläche aufweist.

Aus dem obigen wird deutlich, dass die Lastenträger-Verbindungseinrichtung 56a durch eine Betätigung des Betätigungshebels 82 einfach entriegelbar ist (durch Anheben des Betätigungsarms 88) und anschließend leicht lösbar ist, in dem nämlich der Lastenträger 16b vom Steckkopf 59 abgehoben wird. Die Montage des Lastenträgers 16b ist ebenfalls einfach. Er wird mit seinem Aufnahmekörper 61 auf den Steckkopf 59 aufgesteckt, wobei zweckmäßig vorgesehen ist, dass das Verriegelungselement 78 beim Aufstecken in Richtung der Entriegelungsstellung verstellt wird, indem beispielsweise sein freies Ende an einer der Schrägflächen 77 entlang gleitet. Ein aktives Entriegeln beim Aufstecken wäre allerdings auch möglich, wobei dann ein Bediener den Betätigungsarm 88 betätigt, z.B. nach oben zieht.

Zwar kann die Lastenträger-Verbindungseinrichtung 56b auch bei einem einteiligen oder einstückigen Halterteil 12b' mit Vorteil eingesetzt werden. Das Ausführungsbeispiel gemäß Figuren 4 und 5 bevorzugt jedoch die bereits beim 1. Ausführungsbeispiel erwähnte Mehrkomponentenbauweise eines Lastenträger oder eines Kupplungsarms:
Das Halterteil 12b ist wie das Halterteil 12a für eine Steckverbindung mit den jeweiligen Grundhalter, hier dem Grundhalter 11b, ausgestaltet. Der Grundhalter 11b weist eine Aufnahmehülse 19b auf, die ähnlich aufgebaut ist wie die Aufnahmehülse 19a, so zum Beispiel seitliche Drehsicherungsformschlusskonturen 28 hat. In die Drehsicherungsformschlusskonturen 28 passen formschlüssig Drehsicherungsformschlusskonturen 27 einer Grundhalter-Fixiereinrichtung 26b. Die Aufnahmehülse 19b ist im Unterschied zu Aufnahmehülse 19a jedoch nicht mit im Wesentlichen horizontaler Orientierung an den Querträger 17 angebaut, sondern hat eine vertikale Ausrichtung. Das Halterteil 12b wird also von unten her in die Steckaufnahme 20 des Grundhalters 11b eingesteckt (Steckachse 93).

Die Grundhalter-Fixiereinrichtung 26b und die Grundhalter-Fixiereinrichtung 26c beruhen auf demselben Konzept wie die Grundhalter-Fixiereinrichtung 26a, so dass auf die vorigen Ausführungen Bezug genommen werden kann.

Beispielsweise ist im Innern eines Steckvorsprungs 22b des Halterteils 12b, 12b' und 12c ein Betätigungskörper 32 angeordnet, der Formschlusskörper, zum Beispiel Kugeln, durch Führungskanäle 34a nach radial außen vor den Außenumfang des Steckvorsprungs 22b verdrängen kann, wo sie dann in korrespondierende, in der Aufnahmehülse 19b angeordnete Formschlussaufnahmen, insbesondere eine Ringnut oder mindestens eine Kugelkalotte oder dergleichen, eindringen können. Bei den Halterteilen 12b, 12b', 12c sind zur Betätigung des Betätigungskörpers 32 Betätigungsmittel vorgesehen, zum Beispiel ein schematisch angeordneter Handgriff, der über eine nicht dargestelltes Ritzel auf einen Zahnabschnitt am jeweiligen Betätigungskörper 32 wirkt.

Während das Halterteil 12b' ein einteiliges Halterteil ist, beruhen die Systeme 10b und 10c auf einem zweiteiligen Konzept, bei dem wahlweise am Halterteil 12b oder 12c ein Kuppelteil 13b oder 13c mittels einer Arm-Verbindungseinrichtung 55b oder 55c befestigbar ist.

Wenn das Halterteil 12b' beispielsweise im Bereich einer Schnittlinie 94 aufgeteilt wäre, wäre beispielsweise eine Bajonettverbindung zwischen den beiden Teilen zweckmäßig, so dass man durch eine Drehbewegung 95 den vorderen Abschnitt (entsprechend einem Kuppelteil oder einem Lastenträger-Adapterteil) am hinteren Abschnitt, nämlich dem eigentlichen Halterteil 12b' im Sinne der Erfindung lösbar befestigen könnte. Eine zusätzliche Verriegelung, zum Beispiel durch einen Bolzen, einen Querstift oder dergleichen, kann die Verriegelung zusätzlich sichern.

Die Arm-Verbindungseinrichtung 55b umfasst einen Montageflansch 41b, der sich an einem vorderen, freien Ende 96 des Halterteils 12b befindet. Der Montageflansch 41b steht seitlich vor den Außenumfang des freien Ende des 96 vor, so dass eine großflächige Abstützung für einen Montageflansch 43b am Kuppelteil 13b oder Lastenträger-Adapterteil 15b vorhanden ist. Wenn die beiden Montageflansche 41b, 43b aneinander einen liegen, können sie mit nicht dargestellten Bolzen in der Art der Bolzen 47 miteinander verschraubt werden, die Bohrungen 48 an den Montageflanschen 41b, 43b durchdringend.

Wesentlich komfortabler ist das Verbindungskonzept bei der Arm-Verbindungseinrichtung 55c, die prinzipiell baugleich mit der Lastenträger-Verbindungseinrichtung 56b ist. Am freien Ende 96 des Halterteils 12c ist nämlich als erster Verbindungskörper 57 ein Steckkopf 59 angeordnet, an den ein Aufnahmekörper 61 als ein 2. Verbindungskörper 58, der jeweils am Kuppelteil 13c und am Lastenträger-Adapterteil 15c angeordnet ist, ansteckbar ist.

Somit umfasst also die Arm-Verbindungseinrichtung 55c eine Schnellkupplung, so dass das Kuppelteil 13b schnell gegen das Lastenträger-Adapterteil 15b und umgekehrt ausgewechselt werden kann.

Das Konzept der Lastenträger-Verbindungseinrichtung 55b ist beim System 10c zweifach vorhanden, nämlich auch vorne am Lastenträger-Adapterteil 15c. Somit wäre es prinzipiell möglich, den Lastenträger 16b unmittelbar an der Arm-Verbindungseinrichtung 56c zu befestigen. Dadurch ist eine hohe bauliche Flexibilität möglich, so dass beispielsweise der Lastenträger 16b mithilfe des Lastenträgers-Adapterteil 15c mit etwas größerem Abstand zu einer Fahrbahnoberfläche am Fahrzeug 18 befestigbar ist oder wahlweise mit geringerem Abstand zur Fahrbahnoberfläche, indem der Lastenträger 16b unmittelbar am Halterteil 12c befestigt wird.

Beim Lastenträger-System 10d, das teilweise nur schematisch dargestellt ist, ist als eine Lastenträger-Verbindungseinrichtung 56d eine Schnellkupplung zwischen dem Lastenträger 16d und dem Halterteil 12d in Gestalt einer Schwalbenschwanz-Verbindung dargestellt. Das Halterteil 12d ist in den Grundhalter 11d beispielsweise einsteckbar. Zur Verriegelung dient eine Grundhalter-Fixiereinrichtung 26d, die beispielsweise einen am als Hülse ausgestalteten Grundhalter 11d beweglichen Riegel 97, insbesondere einen manuell und/oder elektromotorisch betätigbaren Riegel, umfasst. In seiner Verriegelungsstellung greift der Riegel 97 in eine Aufnahme 98 an einem Steckvorsprung des Halterteils 12d ein.

An einem freien Ende 96 eines Armabschnitts 99 des Halterteils 12d ist ein Montageflansch 41d angeordnet. Der Montageflansch 41d ist plattenartig und weist einen seiner freien, vom freien Ende 96 abgewandten Seite, eine Steckaufnahme 100 auf. Die Steckaufnahme 100 ist zwischen dem Montageflansch 41d und einer Platte 101 ausgebildet. Die Platte 101 ist dreieckförmig. Die Steckaufnahme 100 ist ebenfalls dreieckförmig. Die Steckaufnahme 100 umfasst zueinander schräge Nuten 102, die zwischen dem Montageflansch 41d und der Platte 101 ausgebildet sind.

An einem freien Ende eines vor den Querträger 49 des Lastenträgers 16d vorstehenden Haltearms 103 ist ein Montageflansch 43d oder einer Montageplatte angeordnet, an deren Unterseite Steckvorsprünge 104 angeordnet sind. Die Steckvorsprünge 104 haben winkelige, einander zugewandte Innenseitenflächen 105, die an den Böden der Nuten 102 einen liegen. Wenn also die Steckvorsprünge 104 in die Nuten 102 eingesteckt sind ist eine Verdrehsicherung um eine Fahrzeuglängsachse gegeben. Eine weitere Verdrehsicherung, nämlich um eine Fahrzeugquerachse, wird durch das zweckmäßigerweise flächige Anliegen der vorderen, freien Seite des Montageflanschs 43d am Montageflansch 41d und die Abstützung in den Nuten 102, insbesondere der Platte 101 realisiert. Es ist ersichtlich, dass diese Steckverbindung sehr einfach herstellbar ist und eine gewisse Selbstzentrierung realisiert. Dadurch dass die beiden Nutböden der schrägen Nuten 102 mit ihrer Spitze nach oben zeigen, ist die Lastenträger-Verbindungseinrichtung 56d automatisch bezüglich der Fahrzeuglängsrichtung zentriert, wenn die Steckvorsprünge 104 in die Nuten 102 eingesteckt werden.

Eine zusätzliche Sicherung stellt es dar, wenn beispielsweise Riegel 106, die am einen Verbindungskörper, zum Beispiel dem Verbindungskörper 58, angeordnet sind, in Riegelaufnahmen 107 am anderen Verbindungskörper 57 einsteckbar sind, wenn die beiden Verriegelungskörper 57, 58 ihre Verbindungsstellung einnehmen, mithin also die Steckvorsprünge 104 in die Steckaufnahme 100 eingesteckt sind.

Es versteht sich, dass auch eine Verrastung möglich wäre, wenn beispielsweise die Riegel 106 als Rastkörper ausgestaltet oder durch Rastkörper ersetzt sind, d.h. in Richtung der Verriegelungsstellung bzw. Raststellung federbelastet sind.

Bei den obigen Ausführungsbeispielen ist das jeweilige Halterteil vom Grundhalter bei Nichtgebrauch entfernbar. Das System 10e hingegen sieht vor, dass diese Komponenten dauerhaft aneinander bleiben, jedoch relativ zueinander beweglich sind. So umfasst der Grundhalter 11e beispielsweise eine Platte 110, die an einem Fahrzeug-Querträger 17 eines Fahrzeugs 18 befestigbar ist. Die Platte 110 bildet einen Bestandteil einer Lagerkomponente 111, an der als 2. Lagerkomponente 112 ein Lagerkörper 113 des Halterteils 12e um eine Schwenkachse 116 schwenkbar gelagert ist. Beispielsweise steht von der Platte 110 ein in der Zeichnung nicht sichtbarer Lagerzapfen ab, der in den Lagerkörper 113 eindringt und auf dem der Lagerkörper 113 drehbar, zweckmäßigerweise auch verschieblich, gelagert ist. Die Lagekomponenten 111, 112 bilden also ein Schwenk-Schiebelager 117.

Mittels des Schwenk-Schiebelagers 117 ist das Halterteil 12e mit dem Kuppelteil 13e oder dem nicht dargestellten Lastenträger-Adapterteil zwischen einer nach hinten vor den Heckstoßfänger 118 vorstehenden, zum Ziehen eines Anhängers oder Halten eines Lastenträgers vorgesehenen Gebrauchsstellung G und einer hinter den Heckstoßfänger 121 zumindest teilweise zurück verstellten (in gestrichelten Linien angedeuteten) Nichtgebrauchsstellung N verstellbar.

Anhand der durch einen Pfeil 115 angedeuteten Verschiebbarkeit ist es möglich, dass ein Betätigungskörper 32 der Grundhalter-Fixiereinrichtung 26e, der vorzugsweise auf nicht sichtbare, im Innern des Halterteil 12e angeordnete Formschlusskörper, zum Beispiel Kugeln wirkt, den Lagerkörper 113 in Richtung der Platte 110 verschiebt, so dass als Drehsicherungsformschlusskonturen 27d und 28d an der Platte 110 und der ihr zugewandten Seite des Lagerkörpers 113 vorgesehene Kugeln und Kugelkalotten in Eingriff miteinander gelangen und so den Lagerkörper 113 bezüglich der Platte 110, also bezüglich des Grundhalters 11e, drehfest festlegen.

Der Betätigungskörper 32 ist zweckmäßigerweise mittels eines Zug- und/oder Schubelements 119, z.B. einem Bowdenzug 123, betätigbar.

Der Betätigungskörper 32 ist vorzugsweise in seine Verriegelungsstellung federbelastet.

Vom Lagerkörper 113 steht ein Arm 114 ab. An einem freien Ende 96 des Arms 114 ist eine Arm-Verbindungseinrichtung 55e angeordnet, die einen Montageflansch 41e umfasst, der einen 1. Verbindungskörper 57 bildet.

An diesem 1. Verbindungskörper 57 ist als ein am Kuppelteil 13e angeordneter 2. Verbindungskörper 58 eine Montageplatte 43e befestigbar, vorzugsweise auch verschraubbar. Die Arm-Verbindungseinrichtung 55e ist also ähnlich aufgebaut wie die Arm-Verbindungseinrichtung 55a oder 55b.

Bereits durch dieses Konzept ist es möglich, anstelle des Kuppelteils 13e ein nicht dargestelltes Lastenträger-Adapterteil am Grundsystem bestehend aus Grundhalter 11e bzw. Halterteil 12e zu befestigen. Selbstverständlich sind statt des einfachen Flanschsystems auch komfortablere Verbindungstechniken vorteilhaft möglich, so zum Beispiel die Schnellkupplung in der Art der Lastenträger-Verbindungseinrichtung 56b oder der Arm-Verbindungseinrichtung 55d, eine Bajonettverriegelung oder dergleichen.

Selbstverständlich könnte also eine Schnellkupplung in der Art der Verbindungseinrichtungen 55c, 56c oder eine schematisch erläuterte Bajonettverbindung wie beim System 10b' auch beim Lastenträgers-System 10a oder 10e verwendet werden, zum Beispiel als Ersatz für die Arm-Verbindungseinrichtung 55a, 55e und/oder zur Adaption oder Befestigung eines Lastenträgers.

Man erkennt aus den obigen Ausführungen, dass wenige Grundsysteme bestehend aus Grundhalter und Halterteil individuell an die jeweiligen Verhältnisse vor Ort, beispielsweise die baulichen Gegebenheiten des Fahrzeuges, durch die Adaption eines Kuppelteils oder eines Lastenträger-Adapterteils anpassbar sind.

So ist das System 10a für eine horizontale Montage eines Kupplungarmes oder eines Lastenträgers vorgesehen, während bei dem System 10b eine vertikale Montage, bei der insbesondere die Aufnahmehülse 19b hinter einem Heckstoßfänger versteckt angebracht werden kann, realisiert ist.

Dementsprechend weist also der Steckvorsprung 22b nach oben, wobei der Steckvorsprung 22b im Wesentlichen geradlinig verläuft.

Der Steckvorsprung 22b steht winkelig von einem Halsbereich 25b des Halterteil 12b ab. Der Halsbereich 25b seinerseits wiederum hat zu seinem freien Ende 96 hin einen gekrümmten Verlauf, im eingebauten Zustand nach oben zum freien Ende 96 hin.

Auch Armabschnitte 120, 121 des Kuppelteils 13b und des Lastenträger-Adapterteils 15b haben einen gekrümmten Verlauf, so dass das Kuppelelement 14 und der Steckkopf 59 nach relativ weit hinten oben vor das Heck des Fahrzeugs 18 vorstehen. In einen Zwischenraum zwischen dem Steckvorsprung 22b einerseits und dem Kuppelelement 14 oder dem Steckkopf 59 andererseits passt sozusagen der Heckstoßfänger.

Beim System 10e wird deutlich, dass die relativ aufwändige Schwenk- und/oder Schiebelagerung sowie deren Fixierung für einen Fahrbetrieb (mittels der Grundhalter-Fixiereinrichtung 26e) mehrfach nutzbar ist, nämlich zum einen zum Ziehen eines Anhängers (mittels des Kuppelteils 13e), aber auch für eine einfache, schnelle und/oder fahrsichere Adaption eines Lastenträgers. So könnte beispielsweise das Lastenträger-Adapterteil 15b am Halterteil 12e befestigt werden.

Es sind einfach ausgeführte Verbindungstechniken mit beispielsweise Montageflanschen (Arm-Verbindungseinrichtung 55a, 55e) möglich, aber auch Schnellkupplungen, was am Beispiel der Arm-Verbindungseinrichtung 55c oder der Lastenträger-Verbindungseinrichtung 55b deutlich wird.

Zum Schwenken und/oder axialen Verstellen des Halterteils 12e um die bzw. entlang der Schwenkachse 116 kann zweckmäßigerweise ein Antrieb 122 vorgesehen sein, z.B. ein Elektromotor.

Zum Betätigen des Betätigungskörpers 92, also der Fixiereinrichtung 26e, kann vorteilhaft ein motorischer Antrieb, zum Beispiel ein Antrieb 123, vorgesehen sein. Der Antrieb 123 kann z.B. auf das Zug-/Schubelement 119 wirken.

Das Verriegelungselement 78 kann auch durch einen nicht dargestellten Motor, z.B. einen elektrischen Linearantrieb, betätigbar sein.

## Patentansprüche

1. Lastenträger-System für ein Kraftfahrzeug (18), insbesondere ein Personen-Kraftfahrzeug (18), mit einem an einem Heck des Kraftfahrzeugs (18) fahrzeugfest montierbaren oder montierten Grundhalter (11a-11e), und einem Halterteil (12a-12e), das an dem Grundhalter (11a-11e) mittels einer Grundhalter-Fixiereinrichtung (26a-26e) lösbar befestigbar und/oder mittels eines Schwenklagers und/oder eines Schiebelagers beweglich zwischen einer Gebrauchsstellung (G) und einer Nichtgebrauchsstellung (N) gelagert ist, und mit einem Lastenträger (16a, 16b, 16d), der einen Tragbereich zum Tragen einer Last aufweist, wobei das Halterteil (12a-12e) und der Lastenträger (16a, 16b, 16d) mittels einer als eine Lastenträger-Verbindungseinrichtung (56a-56d) dienenden Verbindungseinrichtung lösbar miteinander verbindbar sind, die einen ersten Verbindungskörper (57) und einen zweiten, mit dem ersten Verbindungskörper lösbar verbindbaren Verbindungskörper aufweist, wobei einer der Verbindungskörper der Lastenträger-Verbindungseinrichtung (56a-56d) an einem mit dem Halterteil (12a-12e) mittels einer Arm-Verbindungseinrichtung (55a-55c; 55e) lösbar verbindbaren Lastenträger-Adapterteil (15a-15d) angeordnet ist und eine Formschlussflächenanordnung (69) zum verdrehsicheren Abstützen des Lastenträgers (16a, 16b, 16d) bezüglich einer Hochachse (H) oder Vertikalachse aufweist, **dadurch gekennzeichnet, dass** das Halterteil (12a-12e) zur Bildung eines Kupplungsarmes mit einem Kuppelteil (13a-13c; 13e) mittels der Arm-Verbindungseinrichtung (55a-55c; 55e) lösbar verbindbar ist, wobei an einem freien Ende des Kuppelteils (13a-13c; 13e) ein Kuppelelement (14) zum Ankuppeln eines Anhängers angeordnet ist.

2. Lastenträger-System nach Anspruch 1, **dadurch gekennzeichnet, dass** die Verbindungseinrichtung werkzeuglos lösbar und/oder schließbar ist und/oder ein Schloss aufweist.

3. Lastenträger-System nach Anspruch 1 oder 2, **dadurch gekennzeichnet, dass** der erste Verbindungskörper und/oder der zweite Verbindungskörper (58) einen Montageflansch aufweist.

4. Lastenträger-System nach einem der vorhergehenden Ansprüche, **dadurch gekennzeichnet, dass** der erste Verbindungskörper (57) und der zweite Verbindungskörper (58) Formschlusskonturen, insbesondere mindestens einen Formschlussvorsprung und mindestens eine Formschlussaufnahme, zum formschlüssigen Halt der Verbindungskörper (57, 58) aneinander aufweisen.

5. Lastenträger-System nach Anspruch 4, **dadurch gekennzeichnet, dass** die Formschlusskonturen Schwalbenschwanzkonturen umfassen, die formschlüssig miteinander verbindbar sind, wobei vorteilhaft der mindestens eine Formschlussvorsprung einen Schwalbenschwanzvorsprung und die mindestens eine Formschlussaufnahme eine Schwalbenschwanz-Aufnahme umfasst.

6. Lastenträger-System nach einem der vorhergehenden Ansprüche, **dadurch gekennzeichnet, dass** der erste Verbindungskörper (57) und der zweite Verbindungskörper (58) Bajonett-Verbindungsmittel umfassen.

7. Lastenträger-System nach einem der vorhergehenden Ansprüche, **dadurch gekennzeichnet, dass** die Verbindungseinrichtung ein Verriegelungselement (78) zum Verriegeln der Verbindung zwischen dem ersten Verbindungskörper (57) und dem zweiten Verbindungskörper (58) aufweist, wobei das Verriegelungselement (78) zwischen einer Verriegelungsstellung und einer Entriegelungsstellung an dem ersten Verbindungskörper (57) oder dem zweiten Verbindungskörper (58) unverlierbar beweglich gelagert ist und in der Verriegelungsstellung in eine Verriegelungsaufnahme am andern Verbindungskörper (57, 58) eingreift.

8. Lastenträger-System nach Anspruch 7, **dadurch gekennzeichnet, dass** das Verriegelungselement (78) in die Verriegelungsstellung federbelastet ist und/oder dass es einen Antriebsmotor zum Betätigen des Verriegelungselements (78) aufweist.

9. Lastenträger-System nach einem der vorhergehenden Ansprüche, **dadurch gekennzeichnet, dass** die Verbindungseinrichtung ein Klemmelement oder einen Klemmkörper aufweist, mit dem der erste Verbindungskörper (57) mit dem zweiten Verbindungskörper (58) verklemmbar ist.

10. Lastenträger-System nach einem der vorhergehenden Ansprüche, **dadurch gekennzeichnet, dass** die Grundhalter-Fixiereinrichtung (26a-26e) mindestens ein Paar von Formschlussflächen aufweist, von denen mindestens eine Formschlussfläche zwischen einer Lösestellung, in der die Formschlussflächen voneinander entfernt sind, und einer Fixierstellung der Fixiereinrichtung verstellbar ist, in der die Formschlussflächen formschlüssig aneinander anliegen.

11. Lastenträger-System nach Anspruch 10, **dadurch gekennzeichnet, dass** die mindestens eine bewegliche Formschlussfläche an einem in oder an dem Halterteil (12a-12e) beweglich gelagerten Formschlusskörper, insbesondere einer Kugel oder Rolle, vorgesehen ist und/oder dass es einen Antriebsmotor (123) zum Betätigen der mindestens einen beweglichen Formschlussfläche aufweist.

12. Lastenträger-System nach einem der vorhergehenden Ansprüche, **dadurch gekennzeichnet, dass** die Grundhalter-Fixiereinrichtung (26a-26e) einen, insbesondere in oder an dem Halterteil (12a-12e), beweglich gelagerten Betätigungskörper (32) oder Verdrängerkörper, insbesondere einen Bolzen, zum Betätigen oder Verdrängen eines, insbesondere in oder an dem Halterteil (12a-12e) beweglich gelagerten, Formschlusskörpers in eine Formschlussaufnahme aufweist, an denen jeweils eine Formschlussfläche vorgesehen ist, und/oder dass die Grundhalter-Fixiereinrichtung (26a-26e) jeweils am Halterteil (12a-12e) und am Grundhalter (11a-11e) ortsfeste Drehsicherungsformschlusskonturen (27, 28) umfasst, die für einen verdrehsicheren Halt des Halterteils (12a-12e) am Grundhalter (11a-11e) zumindest in der Gebrauchsstellung (G) formschlüssig ineinander greifen.

13. Lastenträger-System nach einem der vorhergehenden Ansprüche, **dadurch gekennzeichnet, dass** der Grundhalter (11a-11e) eine Steckaufnahme (20) aufweist, in die ein Steckvorsprung (22a, 22b) des Halterteils (12a-12e) einsteckbar ist, und/oder dass das Halterteil (12a-12e) und der Grundhalter (11a-11e) Lagerkomponenten (111, 112) eines Schwenklagers und/oder eines Schiebelagers (117) aufweisen, so dass das Halterteil (12a-12e) an dem Grundhalter (11a-11e) schwenk- und/oder schiebebeweglich gelagert ist, wobei es zweckmäßigerweise einen motorischen Antrieb (122) zum Verstellen des Halterteils (12a-12e) zwischen der Gebrauchsstellung und der zu dem Kraftfahrzeug hinbewegten Nichtgebrauchsstellung aufweist.

14. Lastenträger-System nach einem der vorhergehenden Ansprüche, **dadurch gekennzeichnet, dass** der Grundhalter (11a-11e) zum Halten eines Kupplungsarms einer Anhängekupplung ausgestaltet und/oder vorgesehen ist.

## Claims

1. Load carrier system for a motor vehicle (18), in particular a car (18), with a base holder (11a-11e) which may be or is mounted, fixed to the vehicle, to a rear of the motor vehicle (18), and with a holding part (12a-12e) which may be attached releasably to the base holder (11a-11e) by means of a base holder fixing device (26a-26e), and/or is mounted by means of a swivel bearing and/or a sliding bearing between a position of use (G) and an inoperative position (N), and with a load carrier (16a, 16b, 16d) which has a carrying area for the carrying of a load, wherein the holding part (12a-12e) and the load carrier (16a, 16b, 16d) are connected releasably to one another by means of a connecting device serving as load carrier connecting device (56a-56d), which has a first connecting body (57) and a second connecting body which may be connected releasably to the first connecting body, wherein one of the connecting bodies of the load carrier connecting device (56a-56d) is mounted on a load carrier adapter part (15a-15d) which may be connected releasably to the holding part (12a-12e) by means of an arm connecting device (55a-55c; 55e), and has an interlocking face assembly (69) for non-rotatable support of the load carrier (16a, 16b, 16d) relative to an upright or vertical axis (H), **characterised in that**, to form a coupling arm, the holding part (12a-12e) may be connected releasably to a coupling part (13a-13c; 13e) by means of the arm connecting device (55a-55c; 55e), wherein a coupling element (14) to couple a trailer is provided at one free end of the coupling part (13a-13c; 13e).

2. Load carrier system according to claim 1, **characterised in that** the connecting device may be released and/or closed without tools and/or has a lock.

3. Load carrier system according to claim 1 or 2, **characterised in that** the first connecting body and/or the second connecting body (58) have or has a mounting flange.

4. Load carrier system according to any of the preceding claims, **characterised in that** the first connecting body (57) and the second connecting body (58) have interlocking contours, in particular at least one interlocking projection and at least one interlocking location, for positive locking holding of the connecting bodies (57, 58) to one another.

5. Load carrier system according to claim 4, **characterised in that** the interlocking contours comprise dovetail contours which may be positively connected to one another, wherein advantageously the interlocking projection or projections include a dovetail projection and the interlocking location or locations include a dovetail location.

6. Load carrier system according to any of the preceding claims, **characterised in that** the first connecting body (57) and the second connecting body (58) comprise bayonet connecting means.

7. Load carrier system according to any of the preceding claims, **characterised in that** the connecting device has a locking element (78) for locking the connection between the first connecting body (57) and the second connecting body (58), wherein the locking element (78) is captive and movably mounted on the first connecting body (57) or the second connecting body (58) between a locked position and an unlocked position, and in the locked position engages in a locking location in the other connecting body (57, 58).

8. Load carrier system according to claim 7, **characterised in that** the locking element (78) is spring-loaded in the locked position and/or that it has a drive motor for actuating the locking element (78).

9. Load carrier system according to any of the preceding claims, **characterised in that** the connecting device has a clamping element or a clamping body with which the first connecting body (57) may be clamped to the second connecting body (58).

10. Load carrier system according to any of the preceding claims, **characterised in that** the base holder fixing device (26a-26e) has at least one pair of interlocking faces, of which at least one interlocking face may be adjusted between a release position in which the interlocking faces are removed from one another, and a fixed position of the fixing device, in which the interlocking faces fit positively together.

11. Load carrier system according to claim 10, **characterised in that** the movable interlocking face or faces is or are provided on an interlocking body movably mounted in or on the holding part (12a-12e), in particular a ball or roller, and/or that it has a drive motor (123) to actuate the movable interlocking face or faces.

12. Load carrier system according to any of the preceding claims, **characterised in that** the base holder fixing device (26a-26e) has an actuating body (32) or displacer body, in particular movably mounted in or on the holding part (12a-12e), in particular a pin, for actuating or displacing an interlocking body, in particular movably mounted in or on the holding part (12a-12e), into an interlocking location, at which in each case an interlocking face is provided, and/or that the base holder fixing device (26a-26e) in each case includes on the holding part (12a-12e) and on the base holder (11a-11e) stationary anti-twist locking contours (27, 28) which engage positively in one another for a non-rotatable hold of the holding part (12a-12e) on the base holder (11a-11e), at least in the position of use (G).

13. Load carrier system according to any of the preceding claims, **characterised in that** the base holder (11a-11e) has a plug-in socket (20) into which a plug-in projection (22a, 22b) of the holding part (12a-12e) may be plugged, and/or that the holding part (12a-12e) and the base holder (11a-11e) have bearing components (111, 112) of a swivel bearing and/or a sliding bearing (117), so that the holding part (12a-12e) is mounted with the ability to swivel and/or slide on the base holder (11a-11e), wherein it has expediently a powered drive (122) for shifting the holding part (12a-12e) between the position of use and the inoperative position moved towards the motor vehicle.

14. Load carrier system according to any of the preceding claims, **characterised in that** the base holder (11a-11e) is designed and/or provided for holding a coupling arm of a trailer coupling.

## Revendications

1. Système de support de charges pour un véhicule automobile (18), en particulier pour une voiture automobile particulière (18), comprenant un support de base (11a - 11e) monté ou pouvant être monté de manière solidaire au véhicule au niveau d'une partie arrière du véhicule automobile (18), et une partie de maintien (12a - 12e), qui peut être fixée de manière amovible au niveau du support de base (11a - 11e) au moyen d'un dispositif de fixation de support de base (26a - 26e) et/ou qui est logée de manière mobile entre une position d'utilisation (G) et une position de non-utilisation (N) au moyen d'un palier de pivotement et/ou d'un palier de glissement, et comprenant également un support de charges (16a, 16b, 16d), qui présente une zone porteuse servant à supporter une charge, sachant que la partie de maintien (12a - 12e) et le support de charges (16a, 16b, 16d) peuvent être reliés l'un à l'autre de manière amovible au moyen d'un dispositif d'assemblage faisant office de dispositif d'assemblage de support de charges (56a - 56d), lequel présente un premier corps d'assemblage (57) et un deuxième corps d'assemblage pouvant être relié de manière amovible au premier corps d'assemblage, sachant qu'un des corps d'assemblage du dispositif d'assemblage de support de charges (56a - 56d) est disposé au niveau d'une partie d'adaptation de support de charges (15a - 15d) pouvant être assemblée de manière amovible à la partie de maintien (12a - 12e) au moyen d'un dispositif d'assemblage de bras (55a - 55c ; 55e) et qu'il présente un ensemble de surfaces à complémentarité de forme (69) servant à soutenir en empêchant toute rotation le support de charges (16a, 16b, 16d) par rapport à un axe vertical (H) ou un axe vertical, **caractérisé en ce que** la partie de maintien (12a - 12e) peut être assemblée de manière amovible à une partie de couplage (13a - 13c ; 13e) au moyen du dispositif d'assemblage de bras (55a - 55c ; 55e) pour former un bras de couplage, sachant qu'un élément de couplage (14) destiné à être accouplé à une remorque est disposé au niveau d'une extrémité libre de la partie de couplage (13a - 13c ; 13e).

2. Système de support de charges selon la revendication 1, **caractérisé en ce que** le dispositif d'assemblage peut être retiré sans outil et/ou peut être fermé er/ou présente une serrure.

3. Système de support de charges selon la revendication 1 ou 2, **caractérisé en ce que** le premier corps d'assemblage et/ou le deuxième corps d'assemblage (58) présentent une bride de montage.

4. Système de support de charges selon l'une quelconque des revendications précédentes, **caractérisé en ce que** le premier corps d'assemblage (57) et le deuxième corps d'assemblage (58) présentent des contours à complémentarité de forme, en particulier au moins une partie faisant saillie à complémentarité de forme et au moins un logement à complémentarité de forme, servant à maintenir par complémentarité de forme les corps d'assemblage (57, 58) l'un contre l'autre.

5. Système de support de charges selon la revendication 4, **caractérisé en ce que** les contours à complémentarité de forme comprennent des contours en queue-d'aronde, qui peuvent être assemblés les uns aux autres par complémentarité de forme, sachant que de manière avantageuse la au moins une partie faisant saillie à complémentarité de forme comprend une partie faisant saillie en queue-d'aronde et que le au moins un logement à complémentarité de forme comprend un logement en queue-d'aronde.

6. Système de support de charges selon l'une quelconque des revendications précédentes, **caractérisé en ce que** le premier corps d'assemblage (57) et le deuxième corps d'assemblage (58) comprennent des moyens d'assemblage à baïonnette.

7. Système de support de charges selon l'une quelconque des revendications précédentes, **caractérisé en ce que** le dispositif d'assemblage présente un élément de verrouillage (78) servant à verrouiller l'assemblage entre le premier corps d'assemblage (57) et le deuxième corps d'assemblage (58), sachant que l'élément de verrouillage (78) est logé de manière mobile et imperdable entre une position de verrouillage et une position de déverrouillage au niveau du premier corps d'assemblage (57) ou au niveau du deuxième corps d'assemblage (58) et qu'il vient en prise, dans la position de verrouillage, avec un logement de verrouillage au niveau de l'autre corps de verrouillage (57, 58).

8. Système de support de charges selon la revendication 7, **caractérisé en ce que** l'élément de verrouillage (78) est soumis à l'action d'un ressort dans la position de verrouillage, et/ou **en ce qu'**il présente un moteur d'entraînement servant à actionner l'élément de verrouillage (78).

9. Système de support de charges selon l'une quelconque des revendications précédentes, **caractérisé en ce que** le dispositif d'assemblage présente un élément de serrage ou un corps de serrage, à l'aide duquel le premier corps d'assemblage (57) peut être assemblé par serrage au deuxième corps d'assemblage (58).

10. Système de support de charges selon l'une quelconque des revendications précédentes, **caractérisé en ce que** le dispositif de fixation de support de base (26a - 26e) présente au moins une paire de surfaces à complémentarité de forme, dont au moins une surface à complémentarité de forme peut être déplacée entre une position de desserrage, dans laquelle les surfaces à complémentarité de forme sont éloignées les unes des autres, et une position de fixation du dispositif de fixation, dans laquelle les surfaces à complémentarité de forme reposent les unes contre les autres par complémentarité de forme.

11. Système de support de charges selon la revendication 10, **caractérisé en ce que** la au moins une surface à complémentarité de forme mobile est prévue au niveau d'un corps à complémentarité de forme logé de manière mobile dans ou au niveau de la partie de maintien (12a -12e), en particulier au niveau d'une rotule ou d'un galet, et/ou **en ce que** le système de support de charges présente un moteur d'entraînement (123) servant à actionner la au moins une surface à complémentarité de forme mobile.

12. Système de support de charges selon l'une quelconque des revendications précédentes, **caractérisé en ce que** le dispositif de fixation de support de base (26a - 26e) présente un corps d'actionnement (32) ou un corps de déplacement logé de manière mobile en particulier dans ou au niveau de la partie de maintien (12a - 12e), en particulier un boulon servant à actionner ou à déplacer un corps à complémentarité de forme logé de manière mobile en particulier dans ou au niveau de la partie de maintien (12a - 12e) dans un logement à complémentarité de forme, au niveau desquels respectivement une surface à complémentarité de forme est prévue, et/ou **en ce que** le dispositif de fixation de support de base (26a - 26e) comprend respectivement au niveau de la partie de maintien (12a - 12e) et au niveau du support de base (11 a - 11 e), des contours à complémentarité de forme empêchant toute rotation (27, 28), lesquels s'engrènent les uns dans les autres par complémentarité de forme en vue d'un maintien empêchant toute rotation de la partie de maintien (12a - 12e) au niveau du support de base (11a - 11e), au moins dans la position d'utilisation (G).

13. Système de support de charges selon l'une quelconque des revendications précédentes, **caractérisé en ce que** le support de base (11a - 11 e) présente un logement d'enfichage (20), dans lequel une partie faisant saillie d'enfichage (22a, 22b) de la partie de maintien (12a - 12e) peut être enfichée, et/ou **en ce que** la partie de maintien (12a - 12e) et le support de base (11a - 11 e) présentent des composants de palier (111, 112) d'un palier de pivotement et/ou d'un palier de glissement (117) de sorte que la partie de maintien (12a - 12e) est logée de manière mobile par pivotement et/ou par glissement au niveau du support de base (11a - 11e), sachant qu'elle présente de manière appropriée un entraînement (122) à moteur servant à déplacer la partie de maintien (12a - 12e) entre la position d'utilisation et la position de non-utilisation déplacée en direction du véhicule automobile.

14. Système de support de charges selon l'une quelconque des revendications précédentes, **caractérisé en ce que** le support de base (11a - 11 e) est configuré et/ou est prévu pour maintenir un bras de couplage d'un attelage de remorque.
